## Europäisches Patentamt
## European Patent Office
## Office européen des brevets

(19)

(11) Numéro de publication: **0 025 758**
**A1**

## DEMANDE DE BREVET EUROPEEN

(21) Numéro de dépôt: **80401298.7**

(22) Date de dépôt: **10.09.80**

(51) Int. Cl.³: **F 16 C 35/12,** B 23 Q 1/08

(30) Priorité: **13.09.79 FR 7922870**

(43) Date de publication de la demande: **25.03.81** **Bulletin 81/12**

(84) Etats contractants désignés: **DE GB IT**

(71) Demandeur: **LA PRECISION INDUSTRIELLE, 23, avenue de la République, F-92505 Rueil Malmaison Hauts-de-Seine (FR)**

(72) Inventeur: **Gamet, Louis Jean Marie, 26, rue Ivan Tourguenieff, F-78380 Bougival Yvelines (FR)**

(74) Mandataire: **Lepeudry-Gautherat, Thérèse et al, Cabinet Armengaud Jeune Casanova, Akerman, Lepeudry, 23 boulevard de Strasbourg F-75010 Paris (FR)**

(54) **Palier pour la broche d'une machine-outil de haute précision.**

(57) Le palier comporte un roulement double, 3, et un roulement simple 4, à faibles conicités, équipés de rouleaux, tels que 7a, à perçages axiaux, 17a, coïncidant avec des perçages de la cage; la bague extérieure 8c2, du roulement 4 reçoit, de ressorts 14, une poussée axiale, transmise par la broche 2 au roulement 3, ce qui supprime tout jeu dans le palier. Selon l'invention une même masse de lubrifiant traverse un refroidisseur, puis les perçages axiaux des rouleaux de manière à remplir complètement les chambres annulaires 18b et 19b entre les deux roulements, et à les équilibrer thermiquement.

L'invention est applicable notamment aux machines-outils de haute précision.

Palier pour la broche d'une machine-outil de haute précision.

--------------------------------

La présente invention concerne un palier pour la broche d'une machine-outil de haute précision et à larges variations de la vitesse de sa broche.

Le développement des tours et des centres d'usinage à commande numérique a fait apparaître la nécessité de vitesses de broche très élevées,de très grands diamètres intérieurs des broches annulaires, et de puissances d'entraînement des broches très élevées, pour pouvoir profiter entièrement des avantages apportés par l'emploi d'outils d'usinage en matériaux nouveaux. Dans le cas des machines-outils de haute précision, toutes ces exigences doivent être satisfaites en évitant absolument l'apparition, dans le palier de la broche, de points chauds, susceptibles de donner lieu à des déformations du bâti de la machine-outil,qui, en produisant des déplacements relatifs de l'outil et de la pièce à usiner, réduiraient considérablement la précision de l'usinage.

Pour tenter de satisfaire à ces exigences, dont certaines sont apparemment contradictoires, on a déjà réalisé, pour les broches de machines-outils de haute précision, des paliers spéciaux : certains de ces paliers connus sont équipés de roulements à billes,qui ont cependant l'inconvénient de présenter des capacités de charge insuffisantes lorsque la broche est soumise à un couple intense et tourne à faible vitesse. D'autres paliers connus sont munis de galets cylindriques courts,et de butées à billes pour encaisser les charges axiales. On connaît également

2

des paliers équipés de roulements à rouleaux coniques de longueur et de diamètre relativement faibles, pour réduire l'échauffement du palier qui est dû notamment, lorsque la broche tourne à grande vitesse, aux frottements hydrodynamiques ; cette réduction relative des dimensions des rouleaux a cependant l'inconvénient de réduire la capacité de charge de la broche. D'autre part, dans tous ces paliers connus, on prévoit systématiquement, dans chaque roulement, un jeu à froid, qui est prédéterminé de façon que les dilatations thermiques intervenant aux vitesses élevées de rotation de la broche, se traduisent seulement par une réduction de ce jeu, sans entraîner cependant un blocage du roulement correspondant. Or l'existence d'un tel jeu à froid réduit évidemment la précision de la machine-outil lorsque sa broche tourne à des vitesses peu élevées.

Pour supprimer en particulier ce dernier inconvénient, on a déjà réalisé un palier pour la broche d'une machine-outil de haute précision, qui comporte des roulements à rouleaux de faible conicité, notamment, vers l'extrémité active de la broche, un roulement double à conicités opposées, et, vers son autre extrémité, un roulement simple, à conicité divergeant vers l'extérieur du palier ; la bague extérieure de ce roulement simple est montée coulissante axialement dans son logement, et elle reçoit, de ressorts, une poussée axiale, également dirigée vers l'extérieur du palier. Avec cette disposition, la charge due à la poussée axiale que reçoit la bague extérieure du roulement simple se répartit également sur le chemin du roulement simple et sur celui du roulement double de conicité opposée, c'est-à-dire celui qui est le plus proche de l'extrémité active de la broche ; ces deux roulements extrêmes, à conicités opposées, sont donc préchargés l'un par rapport à l'autre de façon constante, et la broche peut se dilater ou se rétracter, selon sa vitesse de rotation, sans produire de variations sensibles de cette précharge, donc sans introduire de jeu dans les roulements, quelle que soit la vitesse de la rotation de la broche. Enfin, ce palier connu est équipé de roulements

coniques spécialement aménagés pour ne produire pratiquement aucun effet de pompage centrifuge du lubrifiant, qui,pour un débit de lubrifiant assez important pour refroidir efficacement le roulement aux vitesses de broches élevées, créerait un écoulement turbulant dudit lubrifiant,donnant lui-même lieu à un important dégagement de chaleur d'origine hydrodynamique. A cet effet, chacun des roulements coniques du palier connu est équipé de rouleaux coniques à perçages axiaux, coïncidant avec des perçages de la cage du roulement.

Dans ce palier connu, il peut cependant apparaître, entre le roulement simple et le roulement double, aux vitesses très élevées de la broche, de faibles différences de température, qui peuvent par suite entraîner encore de légères déformations du bâti de la machine-outil, et réduire la précision de l'usinage.

La présente invention permet essentiellement de supprimer ce dernier inconvénient. Elle concerne un palier pour la broche d'une machine-outil de haute précision, et à larges variations de la vitesse de sa broche, ce palier comportant, de façon connue en soi, des roulements à rouleaux de faible conicité, notamment,vers l'extrémité active de la broche, un roulement double à conicités opposées, et, vers son autre extrémité, un roulement simple, à conicité divergeant vers l'extérieur du palier, la bague extérieure de ce roulement simple étant montée coulissante axialement dans son logement, et recevant, de ressorts, une poussée axiale, également dirigée vers l'extérieur du palier, chacun desdits roulements coniques étant en outre aménagé de façon à réduire le pompage centrifuge du lubrifiant en cours de fonctionnement,et à permettre audit lubrifiant de traverser chacun des rouleaux du roulement conique par un perçage axial du rouleau et par des perçages coïncidants de la cage du roulement; le palier selon la présente invention est caractérisé en ce qu'il comporte des moyens pour faire circuler une même masse de lubrifiant à travers un dispositif de refroidissement, de préférence extérieur au palier, puis à travers chacun des roulements double et simple, de façon que la partie de l'intervalle annulaire entre la broche et

4 0025758

le bâti, qui est comprise entre les deux roulements, soit toujours complètement remplie, en cours de fonctionnement, par du lubrifiant.

Grâce à cette disposition, il y a toujours du lubrifiant entre les deux roulements, simple et double, du palier selon la présente invention, et les quantités de lubrifiant qui sont respectivement en contact direct avec les deux roulements sont pratiquement à la même température puisqu'elles proviennent d'une même masse de lubrifiant, qui a traversé précédemment un même dispositif de refroidissement. Ceci assure un parfait équilibre thermique entre les deux roulements, simple et double, du palier selon la présente invention, et par suite le maintien d'une précision d'usinage très élevée même aux grandes vitesses de rotation de la broche.

Dans une forme de réalisation préférée du palier selon la présente invention, deux chambres de lubrification sont aménagées dans l'intervalle annulaire entre la broche et le bâti, de façon à s'étendre de part et d'autre respectivement du roulement double et du roulement simple, et chaque chambre de lubrification comporte, de part et d'autre du roulement correspondant, une entrée et une sortie de lubrifiant. De préférence, les deux chambres de lubrification sont séparées par une cloison annulaire, dont le diamètre intérieur est largement supérieur au diamètre extérieur de la broche, et des moyens sont prévus pour ajuster la position axiale de la cloison annulaire, par exemple sous la forme d'un organe de commande à excentrique, monté librement tournant à travers la paroi du bâti. Ces dispositions favorisent encore davantage l'équilibre thermique entre les deux roulements, simple et double, du palier selon la présente invention, et peuvent même permettre d'ajuster cet équilibre thermique avec une très haute précision, en ajustant la position axiale de la cloison annulaire qui sépare les chambres de lubrification respectives des deux roulements.

La présente invention permet également d'éviter d'avoir à laisser subsister un certain jeu axial à froid entre les deux éléments du roulement double, pour éviter leur blocage aux vitesses élevées de rotation ; un tel jeu à froid aurait en effet l'inconvénient de nuire à la stabilité de la broche lorsqu'elle est soumise à une charge radiale ; dans ce dernier cas, en effet, si, au cours d'une opération d'usinage, la broche était soumise à une poussée axiale dirigée vers son extrémité active, cette poussée axiale tendrait à faire s'écarter de leur chemin de roulement, les rouleaux coniques du roulement le plus proche de l'extrémité active de la broche, le jeu ainsi créé autorisant des déplacements de l'axe de la broche en cas de charge radiale, et réduisant par suite la précision de l'usinage.

Pour supprimer ce dernier inconvénient, la présente invention prévoit d'utiliser pour le palier, un roulement double de type connu, dont les chemins extérieurs sont portés respectivement par deux parties d'une même bague, notamment une première partie, située vers l'extérieur du palier, et bloquée axialement dans son logement, et une seconde partie, située vers l'intérieur du palier.

Dans le roulement à double rangée du type connu, le diamètre extérieur de la bague bi-conique est de même diamètre sur toute sa longueur et son montage dans le logement de la poupée s'effectue avec un léger jeu qui permet son coulissement lors du montage. Du fait que cette bague se trouve positionnée par un ergot engageant dans une encoche pratiquée sur le diamètre extérieur de la collerette d'appui latérale, l'huile introduite dans le roulement par l'extérieur ne nécessite qu'un seul trou d'arrivée pratiqué radialement au centre de la bague extérieure bi-conique. En fait il existe normalement trois trous équidistants disposés à 60° afin d'éviter les déformations en cours d'usinage et en service.

Le roulement connu à double rangée utilisé à la partie active de la broche comporte des différences notables par rapport au roulement normal, ces différences faisant partie de la présente invention.

.6

Tout d'abord le diamètre extérieur de la bague extérieure n'est pas de même diamètre sur toute sa longueur. Au contraire, les parties extérieures qui correspondent aux chemins avant et arrière sont décrochées entre elles à partir d'une zone médiane. La partie avant, côté porte-pièce de la broche, est d'un diamètre supérieur à celle d'arrière et montée à ajustement interférentiel et non à jeu dans le logement de la poupée. La partie arrière de la bague extérieure se trouve sans aucun contact avec le logement et donc en quelque sorte le chemin arrière du roulement double se trouve en porte-à-faux par rapport au chemin avant.

Afin de conférer à la seconde partie de la bague une certaine déformabilité élastique par rapport à la première partie, deux gorges concentriques sont pratiquées à la partie médiane de la bague double, l'une extérieure, l'autre intérieure. Afin d'accentuer la déformabilité au moyen d'un enlèvement de métal supplémentaire dans la partie médiane, un certain nombre de trous radiaux relient les gorges extérieures et intérieures. Il est à noter que contrairement au roulement double connu, ces trous n'ont aucune fonction de passage d'huile.

L'élasticité relative de la partie arrière de la bague double permet de maintenir constante la précharge appliquée au montage entre les chemins avant et arrière du roulement par ajustement de l'épaisseur de l'entretoise placée entre les bagues intérieures des roulements. Mais il faut pouvoir assurer un certain contrôle de l'élasticité de la partie arrière de la bague double biconique.

Ce résultat est obtenu en donnant à la surface extérieure de cette deuxième partie une surface de révolution dont la génératrice est bombée dans la direction axifuge c'est-à-dire dirigé radialement vers l'extérieur, de telle sorte que, quand la broche tourne assez rapidement, l'expansion radiale de la seconde partie de la bague supprime le jeu entre ladite seconde partie et le logement de la bague, d'abord au niveau de la zone de sa surface extérieure bombée dont le diamètre est maximum, puis, progressivement,au fur et à mesure de l'accroissement de la vitesse de la broche,au niveau de la zone de sa surface extérieure,dont le diamètre va en décroissant vers l'intérieur du palier. Grâce à cette disposition selon la présente invention, il est possible de supprimer tout jeu axial entre les deux éléments du roulement double, sans qu'il en résulte cependant aucun risque de blocage desdits roulements du fait des dilatations thermiques qui interviennent aux vitesses élevées de rotation de la broche.

A titre d'exemple, on a décrit ci-dessous et illustré schématiquement au dessin annexé une forme de réalisation préférée du palier pour broche de machine-outil selon la présente invention.

La figure 1 est une vue de cette forme de réalisation , en coupe par le plan vertical qui passe par l'axe de la broche .

La figure 2 est une vue à grande échelle du détail A de la figure 1.

La figure 3 illustre schématiquement le circuit de lubrification du palier de broche illustré sur la figure 1.

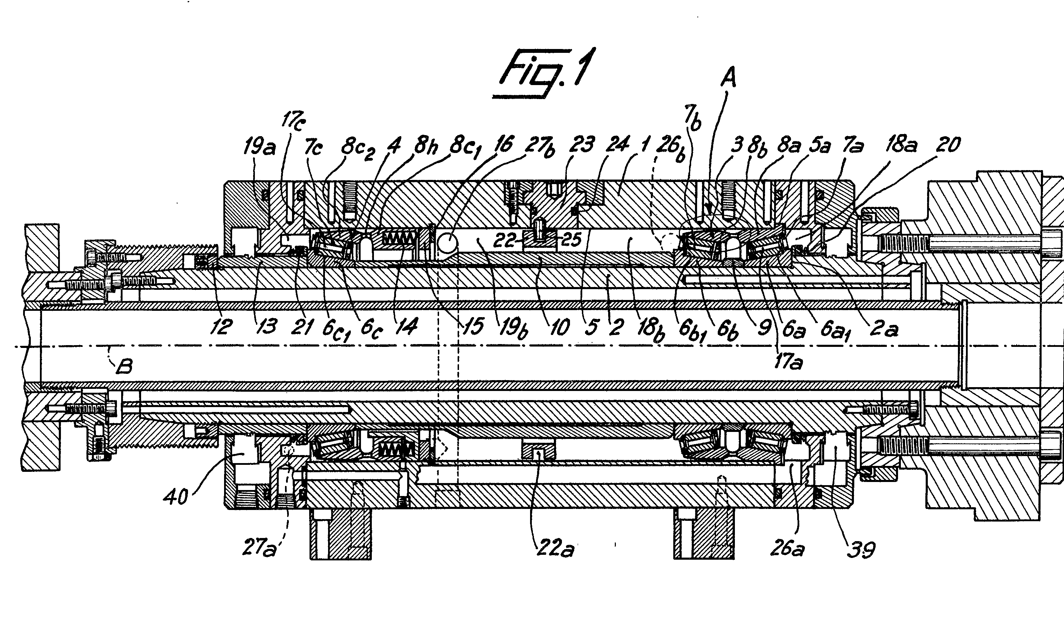

Sur la figure 1, 1 désigne le bâti d'un palier selon la présente invention, pour la broche tubulaire, 2, d'une machine-outil de haute précision. Du côté de l'extrémité active de la broche 2 (vers la droite de la figure 1), est monté un roulement double à conicités opposées, dont l'ensemble est désigné par 3, tandis que, vers l'autre extrémité de la broche, est monté un roulement simple,dont l'ensemble est désigné par 4. Ces deux roulements 3 et 4, sont montés dans l'intervalle annulaire entre la broche 2 et un alésage 5, aménagé dans le bâti 1, coaxialement à l'axe B de la broche 2.

Le chemin intérieur, 6a, du roulement double 3, qui est le plus proche de l'extrémité active de la broche 2, est enfilé sur cette dernière de façon à venir en butée axiale contre son épaulement 2a. L'autre chemin intérieur, 6b ,du roulement double 3 est également enfilé sur la broche 2 ; il est séparé du chemin 6a par une bague d'épaisseur pré-

8          0025758

déterminée,9. Le chemin intérieur 6c du roulement simple, 9
4, est enfilé sur l'autre extrémité de la broche 2, en
étant séparé du chemin de roulement 6b par un manchon 10,
de longueur appropriée. L'empilage formé par les bagues ou
manchon 6a, 9, 6b, 10 et 6c est serré contre l'épaulement
2a de la broche 2 par un écrou 12, qui est vissé sur une
partie filetée de l'extrémité gauche (sur la figure 1) de
la broche 2, et qui agit sur le chemin de roulement 6c par
l'intermédiaire d ' une bague intercalaire 13.

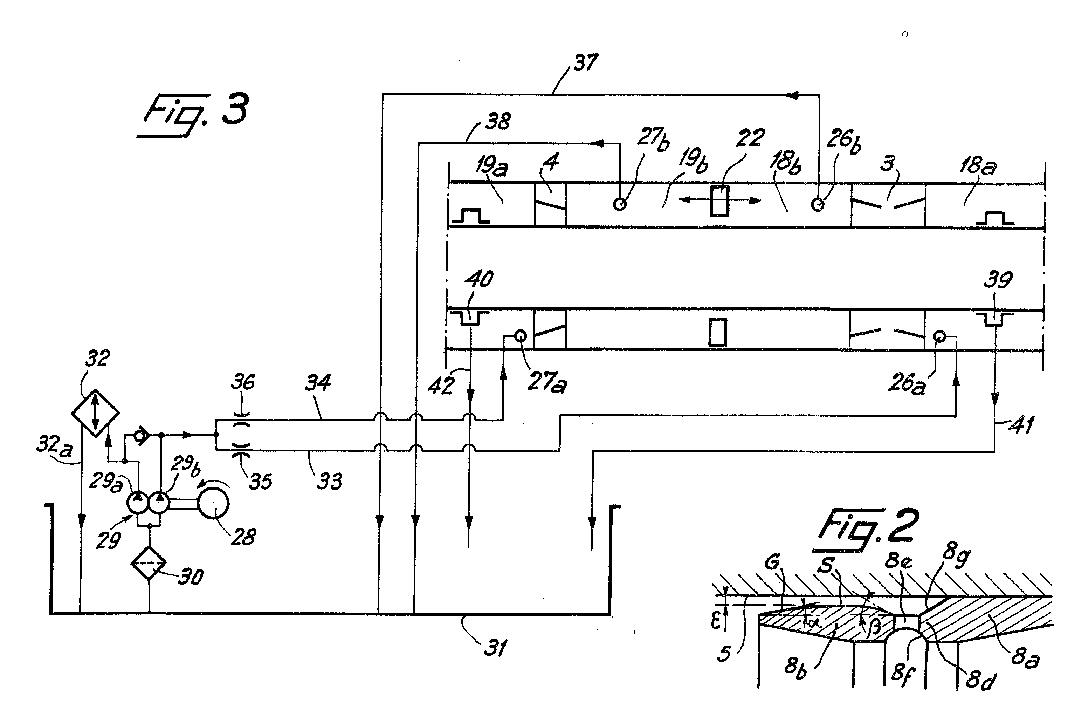

Comme le montre à plus grande échelle la figure 2,
les chemins extérieurs du roulement double, 3, sont portés
respectivement par deux parties, 8a et 8b, d'une même bague,
notamment une première partie, 8a, située vers l'extérieur
du palier, c'est-à-dire vers la droite de la figure 1, et
bloquée axialement dans l'alésage 5, contre un épaulement
5a, et une seconde partie, 8b, située vers l'intérieur
du palier, c'est-à-dire vers la gauche de la figure 1, et
montée dans l'alésage 5 avec un jeu prédéterminé à froid ;
les deux parties 8a et 8b de la bague sont réunies par
une zone de raccordement, 8d , que traversent radialement
des perforations 8e, réparties de préférence régulièrement sur le pourtour de la zone de raccordement 8d.
Selon la présente invention, la zone de raccordement, 8d, des deux parties, 8a et 8b, de la bague
est amincie par une rainure annulaire 8f, par exemple à
section en arc de cercle, qui est aménagée sur la surface
intérieure de ladite bague ; dans la forme de réalisation
illustrée à grande échelle sur la figure 2, la zone de
raccordement 8d de la bague est en outre amincie par une
rainure annulaire, 8g, aménagée sur sa surface extérieure,
de façon à conférer à la seconde partie, 8b, de la bague,
une certaine déformabilité élastique par rapport à sa
première partie, 8a, qui est immobilisée dans l'alésage 5,
comme on l'a indiqué précédemment. D'autre part, comme
visible sur la figure 2, la surface extérieure de la seconde partie, 8b, de la bague, est une surface de révolution, dont la génératrice G est bombée dans la direction axifuge, c'est-à-dire en s'éloignant de l'axe B ; cette surface extérieure, G, de la seconde partie, 8b,de la bague est par ailleurs dimensionnée de telle façon qu'il subsiste entre elle et l'alésage 5 un jeu ε prédéterminé lorsque la broche ne tourne pas ou tourne à faible vitesse. Dans la forme de réalisation préférée de la bague 8a - 8b du palier selon la présente invention, qui est illustrée sur les figures 1 et 2, chaque génératrice G de la surface extérieure de la seconde partie, 8b, de ladite bague est inclinée sur l'axe d'un angle dont la valeur, α, est d'environ 2 degrés près de l'extrémité de la bague, tandis que sa valeur, β, est d'environ 4 degrés, près de la zone de raccordement, 8d, des deux parties 8a et 8b.

La bague extérieure du roulement simple 4, à conicité divergeant vers l'extérieur du palier (c'est-à-dire vers la gauche de la figure 1), comprend également deux parties, notamment,une première partie, 8c1, située vers l'intérieur du palier, en forme d'anneau cylindrique, monté de façon à coulisser axialement sans frottement dans l'alésage 5 sous l'action de ressorts 14, logés partiellement dans des forages axiaux de ladite première partie 8c1, et prenant appui sur des bagues 15 et 16, bloquées axialement par rapport au bâti 1, et une seconde partie, 8c2, portant intérieurement le chemin extérieur du roulement simple 4, les deux parties de la bague étant réunies par une zone de raccordement 8h, perforée radialement, et amincie de façon à conférer à la seconde partie, 8c2, de la bague, une certaine déformabilité élastique par rapport à sa première partie, 8c1. Selon la présente invention, la surface extérieure de la seconde partie, 8c2, de la bague présente une faible conicité convergeant vers l'extérieur du palier (c'est-à-dire vers la gauche de la figure 1).

De façon connue en soi, les chemins de roulement des paires de bagues 6a-8a, 6b-8b et 6c-8c2 sont des paires de surfaces tronconiques de révolution autour de l'axe B de la broche 2, sur lequel leurs sommets respectifs sont confondus en un même point (pour chaque paire de chemins de roulement). Comme on l'a indiqué précédemment, les conicités respectives de ces chemins de roulement, intérieurs et extérieurs,sont faibles, de l'ordre de 10 à 12 degrés. Entre les paires de chemins de roulement 6a-8a, 6b-8b et 6c-8c2 sont montés des rouleaux coniques,7a, 7b et 7c,du type connu suivant : chaque rouleau tel que 7a est traversé par un perçage axial 17a, et tous les rouleaux tels que 7a d'un même roulement sont montés dans une cage, constituée essentiellement par un anneau tronconique de dimensions radiales juste un peu inférieures à celles du chemin de roulement extérieur 8a; cette cage annulaire est munie à ses deux extrémités de collerettes intérieures, dont l'écartement est juste un peu supérieur à la longueur de chacun des rouleaux coniques tels que 7a, chacune de ces collerettes extrêmes ayant un diamètre à peine supérieur à celui du chemin intérieur de roulement, 6a, aux points correspondants ; en outre, chacune des deux collerettes extrêmes de la cage est traversée par un perçage, qui coïncide avec le perçage axial 17a du rouleau 7a correspondant. Un roulement conique de ce type connu ne présente qu'un effet extrêmement réduit de pompage centrifuge du lubrifiant en cours de fonctionnement, d'où résultent les avantages qui seront précisés ultérieurement.

Selon la présente invention, deux chambres de lubrification sont aménagées dans l'intervalle annulaire entre la broche 2 et la paroi de l'alésage 5 du bâti 1 ; l'une des deux chambres de lubrification, 18a - 18b , s'étend de part et d'autre du roulement double 3, tandis que l'autre chambre de lubrification, 19b - 19a s'étend de part et d'autre du roulement simple 4. Les parties 18a et 19a des deux chambres de lubrification, qui sont tournées vers l'extérieur du palier sont étanchéifiées par des joints à lèvre,20 et 21. Les parties 18b et 19b des deux chambres de lubrification sont d'autre part séparées par une cloison annulaire 22, dont le diamètre intérieur est largement supérieur au diamètre extérieur du manchon 10, enfilé sur la broche 2, l'intervalle annulaire entre

11 0025758

les pièces 10 et 22 établissant ainsi une communication entre les parties 18b et 19b des deux chambres de lubrification. D'autre part, selon la présente invention, des moyens sont prévus pour ajuster la position axiale de la cloison annulaire 22 ; dans la forme de réalisation illustrée sur la figure 1, il s'agit d'un organe de commande à excentrique, qui comprend essentiellement une pièce cylindrique 23, montée librement tournante dans un alésage de la paroi 1 du palier, avec interposition d'un d'un joint annulaire d'étanchéité 24 ; un téton 25, assujetti à la pièce tournante 23 excentriquement par rapport à son axe de rotation, assure l'accouplement de cette pièce 23 avec une gorge annulaire 22a de la cloison annulaire 22,ce qui permet de déplacer axialement ladite cloison annulaire 22 simplement en faisant tourner la pièce 23 dans l'alésage du bâti 1. Comme visible sur la figure 1, les parties 18a et 19a des deux chambres de lubrification, qui sont situées vers l'extérieur du palier, sont munies d'entrées de lubrifiant, 26a et 27a,respectivement,disposées de préférence dans les moitiés inférieures desdites chambres de lubrification, tandis que les parties les plus intérieures, 18b et 19b,des deux chambres de lubrification sont munies de sorties de lubrifiant, 26b et 27b, qui sont disposées de préférence dans les moitiés supérieures desdites chambres.

Sur la partie gauche de la figure 3 on a représenté schématiquement les principaux composants du circuit de lubrification du palier de la figure 1, qui sont extérieurs à ce palier ; ce dernier est représenté schématiquement sur la partie droite de la figure 3 , pour montrer de façon complète son circuit de lubrification. Sur la partie gauche de la figure 3, 28 désigne un moteur électrique, 29, une pompe, à deux étages, 29a et 29b ; les aspirations des deux étages 29a et 29b sont réunies en parallèle à une conduite dans laquelle est inséré un filtre 30,et qui débouche près du fond d'un bac à lubrifiant 31.

Le refoulement de l'étage 29a de le pompe est raccordé par une conduite à l'entrée d'un dispositif de refroidissement 32, qui peut être d'un type connu quelconque, par exemple un refroidisseur à air, et à la sortie duquel est raccordée une conduite 32a, débouchant près du fond du bac 31. Le refoulement de l'étage 29b de la pompe 29 est raccordé en parallèle aux deux entrées de lubrifiant, 26a et 27a du palier, respectivement par deux conduites, 33 et 34, dans lesquelles sont insérés des dispositifs d'étranglement, 35 et 36. Les sorties de lubrifiant, 26b et 27b, dont est pourvu le palier sont elles-mêmes raccordées à des conduites 37 et 38, qui débouchent au voisinage du fond du bac à lubrifiant 31. Les quantités de lubrifiant qui, au cours du fonctionnement du palier, s'échappent des parties 18a et 19a des deux chambres de lubrification, en contournant les joints à lèvre, 20 et 21, parviennent dans deux rainures annulaires, 39 et 40, aménagées dans le bâti 1 ; les quantités de lubrifiant ainsi récupérées sont évacuées des parties inférieures des rainures annulaires 39 et 40 par des conduites 41 et 42 (figure 3), aboutissant au bac à lubrifiant 31. Dans une variante du palier selon la présente invention, les joints à lèvre 20 et 21 sont supprimés, ce qui a pour seul effet, peu gênant, d'accroître le débit de lubrifiant dans les conduites d'évacuation 41 et 42 lors de l'arrêt de la broche.

Le mode de fonctionnement du palier selon la présente invention, qui vient d'être décrit, est le suivant :

Les roulements coniques 3 et 4, la bague intercalaire 9 du roulement double 3 sont dimensionnés, et le serrage, par l'écrou 12, des différentes pièces 6a, 9, 6b, 10, 6c et 13 est réglé de telle façon que, lorsque l'ensemble du palier est à la température ambiante, c'est-à-dire lorsque la broche 2 n'est pas entraînée en rotation, ou bien tourne seulement avec une vitesse relativement faible, il n'existe aucun jeu dans les roulements mentionnés, c'est-à-dire par exemple que les rouleaux coniques 7a roulent librement, mais sans jeu, sur leurs chemins intérieur 6a et extérieur 8a. Cette absence de jeu est due en particulier au fait que les ressorts tels que 14 poussent la bague 8c1-8c2 de façon que le chemin de roulement extérieur, porté par sa partie 8c2 vienne s'appliquer sans jeu sur les rouleaux /c, en les poussant, en raison de la conicité, contre un épaulement annulaire, 6c1, du chemin de roulement intérieur correspondant, 6c ; comme ce dernier est solidaire de la broche 2, cette dernière transmet la poussée axiale correspondante, dirigée vers la gauche de la figure 1, par l'intermédiaire de son épaulement annulaire 2a, au chemin de roulement intérieur 6a du roulement double 3. Celui-ci comporte un épaulement annulaire 6a1, analogue à 6c1, qui transmet donc la poussée aux rouleaux coniques tel que 7a,et,en raison de la conicité du roulement, à leur chemin extérieur de roulement, 8a ; ce dernier communique la même poussée axiale, dirigée vers la gauche de la figure 1, au chemin extérieur de roulement 8b, qui est de ce fait appliqué sur les rouleaux coniques correspondants,7b, ces derniers l'étant sur le chemin intérieur de roulement correspondant, 6b. Grâce à cette disposition, connue en soi ,l'absence de jeu de la broche 2 dans son palier aux faibles vitesses de rotation de ladite broche exclut tout déplacement erratique entre la pièce à usiner, solidaire en rotation de ladite broche, d'une part, et l'outil, solidaire du bâti de la machine, d'autre part, si bien que la machine-outil équipée du palier selon la présente invention offre une précision d'usinage très élevée aux faibles vitesses de rotation de sa broche.

Au fur et à mesure que la vitesse de rotation de la broche 2 augmente, il en est de même des dégagements de chaleur qui sont dus pour la plus grande partie au frottement des extrémités correspondantes des rouleaux coniques 7a, 7b et 7c, contre les épaulements annulaires 6a1, 6b1 et 6c1 de leurs chemins intérieurs de roulement respectifs,6a, 6b et 6c. Une partie de la chaleur ainsi dégagée passe dans la broche 2, qui subit de ce fait de légères dilatations dans les directions axiale et radiales. Comme,par ailleurs, la bague 8a, portant le chemin extérieur de roulement des rouleaux 7a est bloquée axialement contre l'épaulement 5a du bâti 1, lequel ne subit pratiquement pas de dilatation thermique, il serait à craindre que les dilatations respectives de la broche 2 ainsi que des bagues intérieures 6a, 6b et 6c, dans les directions axiale et radiales,ne se compensent pas exactement,et qu'il en résulte éventuellement l'apparition,dans les roulements 3 et 4, de blocages ou de jeux nuisant à la précision de la machine-outil aux vitesses de rotation moyennes et élevées de sa broche. Aux vitesses de rotation moyennes de la broche 2, cependant, les ressorts 14, en se tendant ou se détendant, compensent les différences de dilatation thermique qui peuvent survenir,de manière à éviter certainement l'apparition de jeux dans les roulements 3 et 4. Ce mécanisme, connu en soi, de compensation des jeux éventuels par l'action des ressorts 14 s'est cependant révélé insuffisant aux vitesses très élevées de rotation de la broche, par exemple au-dessus de 3.000 tours/minute.Pour une broche d'un diamètre de l'ordre de 100 mm, à ces vitesses de rotation élevées, il peut apparaître des différences de dilatation entre les pièces précédemment mentionnées, telles que, dans certains cas, les roulements 3 et 4 prendraient des jeux incompatibles avec une haute précision d'usinage, alors que, pour d'autres dimensionnements, certains de ces roulements pourraient au contraire se bloquer.

Ces inconvénients, apparaissant aux vitesses élevées de rotation de la broche 2, sont supprimés dans le cas du palier selon la présente invention, notamment grâce au fait qu'il comporte des moyens pour faire circuler une même masse de lubrifiant à travers le dispositif de refroidissement 32, extérieur au palier, puis à travers chacun des roulements double, 3, et simple, 4, de façon que la partie de l'intervalle annulaire entre la broche 2 et l'alésage 5 du bâti 1, qui est comprise entre les deux roulements 3 et 4, soit toujours complètement remplie, en cours de fonctionnement, par du lubrifiant. En effet, le schéma de la figure 3 montre clairement , d'une part, que la température du lubrifiant contenu dans le bac 31 est régulée à une valeur appropriée, sensiblement constante, par le circuit 30 - 29a - 32 - 32a. D'autre part, une même masse d'huile, qui est contenue dans le bac 31, et dont la température est régulée de la façon indiquée, est envoyée par l'étage 29b de la pompe 29 dans les deux conduites 33 et 34 pour alimenter respectivement les entrées 26a et 27a des chambres respectives de lubrification du roulement double 3 et du roulement simple 4. Le lubrifiant ainsi introduit dans la partie 18a de la chambre de lubrification du roulement double 3 traverse d'abord les perçages axiaux des différents rouleaux 7a, ainsi que les perçages coïncidants de leur cage, puis les perçages axiaux des rouleaux 7b, et les perçages coïncidants de leur cage, avant de parvenir dans la partie 18b de la chambre de lubrification, d'où le lubrifiant est évacué par la sortie 26b. De même, le lubrifiant parvenu dans la partie 19a de la chambre de lubrification du roulement 4 traverse les perçages axiaux 17c des rouleaux 7c et les perçages coïncidants de leur cage, puis l'intérieur de la première partie, 8c1 de la bague 8c1-8c2, avant de parvenir dans la partie 19b de la chambre de lubrification, d'où le lubrifiant est évacué par l'orifice 27b. Il est remarquable que les rouleaux coniques 7a et 7c sont traversés par le lubrifiant dans la direction de leurs perçages axiaux 17a et 17c, c'est-à-dire dans des directions axipètes, ce qui n'est possible que grâce à l'emploi de roulements à rouleaux coniques présentant un faible effet de pompage centrifuge, comme on l'a précisé antérieurement. Non seulement les chambres de lubrification des deux roulements 3 et 4 sont traversées par des masses de lubrifiant à la même température, régulée comme il a été indiqué précédemment, mais en outre les deux masses de lubrifiant remplissant à un instant donné les deux chambres de lubrification sont en contact, et par suite en échange thermique, au niveau de l'intervalle annulaire entre le manchon 10 et la cloison annulaire 22, ce qui favorise encore l'équilibre thermique entre les deux masses de lubrifiant, et par suite entre les deux roulements, 3 et 4, qu'elles refroidissent respectivement. Un ajustage très fin de l'équilibre thermique entre les deux roulements 3 et 4 peut être obtenu en faisant varier les volumes respectifs des parties 18b et 19b des deux chambres correspondantes de lubrification, grâce à un léger déplacement
axial de la cloison annulaire 22,obtenu en faisant tourner
la pièce 23. Il y a avantage à équiper le palier selon la
présente invention de roulements coniques à très faible effet
de pompage centrifuge puisque cela permet d'éviter d'avoir
à faire circuler le lubrificant dans son circuit sous une
pression suffisante pour vaincre un fort effet de pompage
centrifuge ; le recours à un lubrifiant sous-pression ne manquerait pas, en effet, d'accroître les dégagements de chaleur dans les
roulements et dans la pompe d'alimentation,susceptibles de réduire la précision de l'usinage ; il en résulterait aussi un accroissement des fuites de lubrifiant, auxquelles on ne pourrait
s'opposer que par le recours à des joints frottants, également sources de dégagements de chaleur. La disposition
des entrées de lubrifiant 26a et 27a à la partie inférieure du bâti 1, et celle des sorties de lubrifiant, 26b et 27b,
à sa partie supérieure,sont avantageuses dans la mesure
où elles évitent la formation de poches d'air, qui pourraient
provoquer l'émulsion et l'oxydation du lubrifiant. L'ajustement précis du rapport des volumes des deux chambres
de lubrification par déplacement de la cloison annulaire 22
évite de recourir à des organes de réglage du débit du
lubrifiant dans les conduites 33, 34, 37, 38, qui créeraient
des déséquilibres de pression entre les deux chambres de
lubrification. Enfin, le circuit de lubrification précédemment décrit permet d'utiliser comme lubrifiant une huile
de faible viscosité, dont l'écoulement ne donne lieu qu'à
un faible échauffement hydrodynamique. La circulation du
lubrifiant à travers les roulements et leurs rouleaux coniques assure non seulement leur refroisissement, mais aussi
leur nettoyage permanent, les impuretés étant retenues
par le filtre 30 au fond du bac 31.

Si, pour une vitesse de rotation élevée de la
broche 2, les bagues intérieures 6a et 6b du roulement
conique double 3 se dilatent radialement, il en résulte
un accroîssement de la précharge des deux éléments du roulement double 3. Comme, cependant, la seconde partie 8b de la bague portant les chemins extérieurs de roulement, est élastiquement déformable par rapport à sa première partie 8a, il se produit, par effet de coin, une expansion de ladite seconde partie, 8b, se traduisant par une réduction du jeu ε (figure 2). Pour une vitesse de rotation suffisamment grande de la broche 2, ce jeu ε est supprimé par l'expansion radiale de la seconde partie, 8b, de la bague, lorsque la partie S de sa surface extérieure bombée, G, dont le diamètre est maximal, parvient au contact de l'alésage 5. Cette expansion de la deuxième partie, 8b de la bague a un double effet : d'une part, elle ramène la précharge des deux éléments du roulement conique double 3 pratiquement à sa valeur initiale de réglage ; d'autre part, elle assure un encastrement parfait de la broche 2 au niveau du roulement conique double 3, si bien que la broche 2 résiste mieux aux flexions alternées qu'elle subit pendant l'usinage, en particulier si elle est entraînée de façon directe, par son extrémité opposée à son extrémité active, c'est-à-dire son extrémité gauche sur la figure 1. Grâce à cet encastrement de la broche 2, auquel coopère évidemment le roulement conique simple 4, la résistance mécanique de la broche 2 peut être sensiblement réduite, ce qui permet de réduire la section du métal qui la constitue, notamment en accroissant le diamètre de son évidement intérieur, ce qui est avantageux pour faciliter le passage de divers organes auxiliaires de la machine-outil.

Cependant, même lorsque la partie S de plus grand diamètre de la surface extérieure G de la seconde partie 8b de la bague est parvenue au contact de l'alésage 5, la zone de la surface extérieure G de la partie 8b de la bague dont le diamètre va en décroissant vers l'intérieur du palier (vers la gauche sur la figure 2) garde une certaine élasticité,qui continue à autoriser l'expansion radiale de cette partie de la bague,jusqu'à ce qu'elle soit entièrement appliquée contre l'alésage 5. Pour les vitesses supérieures de la broche 2, on obtient ainsi un encastrement complet de ladite broche 2 au niveau de la partie 8b de la bague portant les chemins extérieurs du roulement 3.Au cours de cette dernière phase de l'expansion de la partie 8b de la bague, la précharge des deux éléments du roulement double 3 est encore maintenue pratiquement constante.

Comme on l'a déjà indiqué précédemment, la seconde partie, 8c2, de la bague 8c1-8c2, qui porte le chemin extérieur du roulement simple 4, présente une certaine déformabilité élastique par rapport à la première partie, 8c1 de la même bague, cette déformabilité élastique étant mise à profit, de façon connue en soi, pour faire produire, par l'action des ressorts 14, une certaine expansion radiale de ladite seconde partie, 8c2, de la bague, par effet de coin, de manière à réduire sensiblement le jeu subsistant entre sa paroi extérieure et l'alésage 5, de façon à rendre pratiquement négligeable le jeu du roulement simple 4, tout en autorisant le coulissement axial de la bague 8c1- 8c2 sous l'action des ressorts 14. Cette expansion de la partie 8c2 de la bague est cependant encore facilitée par le fait que, selon la présente invention, sa surface extérieure présente une faible conicité, de par exemple 15 degrés, cette conicité convergeant vers l'extérieur du palier, c'est-à-dire vers la gauche de la figure 1.

Les deux paliers coniques 3 et 4 étant maintenus pratiquement en équilibre thermique grâce à la circulation de lubrifiant qui a été précédemment décrite, il en résulte également un avantageux équilibre thermique entre les secondes parties, 8b et 8c2 respectivement, des bagues qui portent les chemins extérieurs de ces deux roulements 3 et 4, ce qui procure l'effet très avantageux de "synchroniser" en quelque sorte les expansions de ces deux parties de bague, élastiquement déformables, 8b et 8c2; ainsi, celà permet certainement d'éviter l'apparition de jeux ou de phénomènes de blocage dans l'un au moins des deux roulements 3 et 4, même aux vitesses très élevées de rotation de la broche 2.

La présente invention n'est pas limitée à la forme de réalisation précédemment décrite d'un palier pour broche de machine-outil. Elle englobe toutes ses variantes.

La légère conicité de la surface extérieure de la seconde partie, 8c2, de la bague, portant le chemin extérieur du roulement 4 est matière à option. Il en va de même pour la forme et le dimensionnement de la surface extérieure, G (figure 2) de la partie 8b de la bague portant les chemins extérieurs du roulement double 3. Ces deux surfaces extérieures des parties de bague 8c2 et 8b pourraient être cylindriques sans sortir du cadre de l'invention. Dans ce dernier cas, la partie 8b de la bague pourrait être réunie à sa partie 8a par une zone de raccordement d'épaisseur suffisante pour éviter toute déformabilité de la partie 8b par rapport à la partie 8a. Les perforations radiales de la zone de raccordement 8d sont également matières à option. Les positions relatives de l'entrée et de la sortie du lubrifiant dans chacune des deux chambres de lubrification, correspondant respectivement aux roulements 3 et 4, pourraient être interchangées, ou même être différentes pour les deux chambres. Les moyens pour ajuster la position axiale de la cloison annulaire 22 sont susceptibles de nombreuses variantes, évidentes pour l'homme de l'art ; cette cloison annulaire 22 pourrait être aussi fixe par rapport au bâti 1 du palier. Cette cloison annulaire 22 pourrait même être supprimée, de façon à réunir les deux chambres de lubrification ; dans ce cas, bien entendu, il serait suffisant de prévoir une seule entrée et une seule sortie de lubrifiant , situées respectivement de préférence aux extrémités de l'intervalle annulaire entre la broche 2 et la paroi de l'alésage 5 du bâti 1. Le circuit de refroidissement illustré sur la partie gauche de la figure 3 est également susceptible de nombreuses variantes ; le dispositif de refroidissement à air 32 peut être du type à ventilation naturelle ou forcée ; il pourrait aussi être remplacé éventuellement par un échangeur de température.

REVENDICATIONS DE BREVET

1.- Palier pour la broche d'une machine-outil de haute précision, et à larges variations de la vitesse de sa broche, palier comportant des roulements (3,4) à rouleaux de faible conicité, notamment, vers l'extrémité active de la broche, un roulement double (3) à conicités opposées, et, vers son autre extrémité, un roulement simple (4), à conicité divergeant vers l'extérieur du palier, la bague extérieure de ce roulement simple étant montée coulissante axialement dans son logement, et recevant, de ressorts (14) une poussée axiale, également dirigée vers l'extérieur du palier, chacun desdits roulements (3,4) coniques étant en outre aménagé de façon à réduire le pompage centrifuge du lubrifiant en cours de fonctionnement, et à permettre audit lubrifiant de traverser alors chacun des rouleaux (7) du roulement conique par un perçage axial (17) du rouleau et par des perçages coïncidants de la cage du roulement, palier caractérisé en ce qu'il comporte des moyens (29) pour faire circuler une même masse de lubrifiant à travers un dispositif de refroidissement (32), de préférence extérieur au palier, puis à travers chacun des roulements double (3) et simple (4), de façon que la partie de l'intervalle annulaire entre la broche et le bâti, qui est comprise entre les deux roulements (3,4), soit toujours complètement remplie, en cours de fonctionnement, par du lubrifiant.

2.- Palier selon la revendication 1, caractérisé en ce que deux chambres de lubrification(18a, 18b; 19a, 19b) sont aménagées dans l'intervalle annulaire entre la broche et le bâti, de façon à s'étendre de part et d'autre respectivement du roulement double(3) et du roulement simple (4), et que chaque chambre de lubrification comporte, de part et d'autre du roulement correspondant, une entrée (26a, 27a) et une sortie (26b, 27b) de lubrifiant.

3.- Palier selon la revendication 2, caractérisé en ce que les deux chambres de lubrification sont séparées par une cloison annulaire (22), dont le diamètre intérieur est largement supérieur au diamètre de la broche.

4.- Palier selon la revendication 3, caractérisé en ce que des moyens (23,25) sont prévus pour ajuster la position axiale de la cloison annulaire (22), par exemple sous la forme d'un organe de commande (23) à excentrique (25), monté librement tournant à travers la paroi du bâti.

5.- Palier selon l'une quelconque des revendications 2 à 4, caractérisé en ce que l'entrée (26a,27a) et la sortie (26b, 27b) de lubrifiant s'ouvrent dans les parties de chaque chambre de lubrification, qui sont situées, par rapport au roulement correspondant (3,4), vers l'extérieur et vers l'intérieur du palier, respectivement.

6.- Palier selon l'une quelconque des revendications 2 à 5, caractérisé en ce que l'entrée (26a, 27a) et la sortie (26b, 27b) de lubrifiant s'ouvrent respectivement dans les parties inférieure et supérieure de chaque chambre, et que les deux chambres (18a, 18b ; 19a, 19b) de lubrification sont insérées, par leurs entrées et leurs sorties respectives, en parallèle dans un même circuit fermé de lubrification.

7.- Palier selon l'une quelconque des revendications 1 à 6, dont les chemins extérieurs (8a, 8b) du roulement double (3) sont portés respectivement par deux parties d'une même bague, notamment une première partie (8a), située vers l'extérieur du palier, et bloquée axialement dans son logement, et une seconde partie (8b) située vers l'intérieur du palier, et montée dans son logement avec un jeu prédéterminé à froid, les deux parties de ladite bague étant réunies par une zone de raccordement (8d), perforée radialement, palier caractérisé en ce que la zone de raccordement des deux parties de la bague est amincie par au moins une rainure annulaire (8f), aménagée de préférence sur sa surface intérieure, de façon à conférer à la seconde partie (8b) de la bague une certaine déformabilité élastique par rapport à sa première partie, et que la surface extérieure de ladite seconde partie de la bague est une surface de révolution dont la génératrice est bombée dans la direction axifuge, de telle sorte que, quand la broche tourne assez rapidement, l'expansion radiale de la seconde partie de la bague supprime le jeu entre ladite seconde partie et le logement de la bague, d'abord au niveau de la zone de sa surface extérieure bombée dont le diamètre est maximum , puis, progressivement, au fur et à mesure de l'accroissement de la vitesse de la broche, au niveau de la zone de sa surface extérieure, dont le diamètre va en décroissant vers l'intérieur du palier.

8.- Palier selon la revendication 7, caractérisé en ce que chaque génératrice de la surface extérieure de la seconde partie (8b) de la bague est inclinée sur l'axe d'environ deux degrés près de l'extrémité de la bague, et d'environ quatre degrés près de la zone de raccordement (8d) des deux parties de la bague.

9.- Palier selon l'une quelconque des revendications 1 à 8, dont la bague extérieure (8c) du roulement simple (4) comporte une première partie (8c$_1$), située vers l'intérieur du palier, en forme d'anneau cylindrique, monté de façon à coulisser axialement sans frottement dans son logement sous l'action de ressorts (14) logés partiellement dans des forages axiaux de ladite première partie, une seconde partie (8c$_2$), portant intérieurement le chemin extérieur du roulement simple (4),les deux parties de la bague étant réunies par une zone de raccordement (8h), perforés radialement, et amincie de façon à conférer à la seconde partie de la bague une certaine déformabilité élastique par rapport à sa première partie, palier caractérisé en ce que la surface extérieure de la seconde partie (8c$_2$) de la bague présente une faible conicité convergeant vers l'extérieur du palier de façon à faciliter l'expansion de ladite seconde partie de la bague sous l'effet de la poussée axiale des ressorts (14), qui sont dimensionnés de façon à appliquer ladite surface extérieure de la seconde partie (8c$_2$) de la bague contre l'alésage de son logement.

Fig.1

Fig. 3

Fig. 2

:2:2

**0025758**
Numéro de la demande

**Office européen des brevets**

## RAPPORT DE RECHERCHE EUROPEENNE

EP 80 40 1298

| Catégorie | Citation du document avec indication, en cas de besoin, des parties pertinentes | Revendication concernée |
|---|---|---|
| | **DOCUMENTS CONSIDERES COMME PERTINENTS** | |
| | <u>US - A - 3 211 000</u> (McCANN)<br>  * Colonne 7, lignes 1-4; revendication 10; figures * | 1 |
| | -- | |
| | <u>US - A - 3 221 606</u> (BALDWIN)<br>  * Colonne 2, lignes 8-10 * | 1 |
| | -- | |
| | <u>US - A - 4 137 997</u> (SEIKO)<br>  * Abrégé * | 1 |
| | -- | |
| | <u>DE - A - 2 108 957</u> (DECKEL)<br>  * Page 3, paragraphe 2; en entier; figure 3 * | 7 |
| | -- | |
| | <u>FR - A - 2 259 663</u> (PRECISION)<br>  * Figures * | 9 |
| | -- | |
| | <u>FR - A - 695 524</u> (JUNG)<br>  * Page 1, lignes 31-39 * | 1 |
| | -- | |
| A | <u>FR - A - 1 474 935</u> (VALLIERE)<br>  * Figure 2 * | |
| | ---- | |

**CLASSEMENT DE LA DEMANDE (Int. Cl. 3)**

F 16 C 35/12
B 23 Q  1/08

**DOMAINES TECHNIQUES RECHERCHES (Int. Cl. 3)**

F 16 C
B 23 Q

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 28-11-1980 | SCHOOFS |

OEB Form 1503.1  06.78